# EUROPEAN PATENT APPLICATION

(11) **EP 4 328 254 A1**
(43) Date of publication of application: **28.02.2024**
(21) Application number: 22191573.9
(22) Date of filing: 22.08.2022
(51) Int. Cl.: C08G 59/00, C08L 63/00

(54) **APPLYING STRUCTURAL ADHESIVE**

(71) Applicant: 3M Innovative Properties Company, Saint Paul, MN 55133-3427 (US)
(72) Inventor: Heering, Christian, 40237 Düsseldorf (DE); Schmidt, Tomasz, 5646 Abtwil AG (CH); Vadillo, Damien Christian, Woodbury, MN 55125 (US); Backes, Andreas, 41564 Kaarst (DE); Schneider, Peter Jan, 41468 Neuss (DE); Jung, Adrian Thomas, 41564 Kaarst (DE); Tasch, Boris, 40591 Düsseldorf (DE); Stricker, Andrea, 41516 Grevenbroich (DE); Kröger, Anna Pia Pauline, 41460 Neuss (DE)
(74) Representative: Vossius & Partner Patentanwälte Rechtsanwälte mbB

(57) **Abstract**

The present disclosure provides a printable structural adhesive composition. The present disclosure further provides methods for applying a structural adhesive onto a substrate, the method comprising printing the structural adhesive onto the substrate. Printing may be carried out by jet printing, pad printing, screen printing and/or stencil printing.

## Description

### Technical Field

The present disclosure relates to a printable structural adhesive composition for bonding metal parts. Further, the present disclosure relates to a method for applying the printable structural adhesive composition. The present disclosure also relates to certain uses of the printable structural adhesive composition for bonding and/or sealing.

### Background

Metal joints in vehicles may be formed through the use of an adhesive. For example, an adhesive may be used to bond a metal panel, for example a roof panel to the support structure or chassis of the vehicle. Further, an adhesive may be used in joining two metal panels of a vehicle closure panel. Vehicle closure panels typically comprise an assembly of an outer and an inner metal panel whereby a hem structure is formed by folding an edge of an outer panel over an edge of the inner panel. Typically, an adhesive is provided there between to bond the panels together. Further, a sealant typically needs to be applied at the joint of the metal panels to provide for sufficient corrosion resistance. For example, US 6,000,118 discloses the use of a flowable sealant bead between the facing surfaces of the two panels, and a thin film of uncured paint-like resin between a flange on the outer panel and the exposed surface of the inner panel. The paint film is cured to a solid impervious condition by a baking operation performed on the completed door panel. US 6,368,008 discloses the use of an adhesive for securing two metal panels together. The edge of the joint is further sealed by a metal coating. WO 2009/071269 discloses an expandable epoxy paste adhesive as a sealant for a hem flange. A further hemmed structure is disclosed in US 6,528,176.

Further efforts have been undertaken to develop adhesive compositions whereby two metal panels, in particular an outer and an inner panel of a vehicle closure panel, could be joined with an adhesive without the need for a further material for sealing the joint. Thus, it became desirable to develop adhesive systems that provide adequate bonding while also sealing the joint and providing corrosion resistance. A partial solution has been described in e.g. WO 2007/014039, which discloses a thermally expandable and curable epoxy-based precursor of an expanded thermoset film toughened foamed film comprising a mixture of solid and liquid epoxy resins, and claimed to provide both favorable energy absorbing properties and gap filling properties upon curing. Another partial solution has been described in WO 2011/141148, which describes a heat activated structural adhesive that is solid and dry to the touch at ambient temperature, that can be activated to develop adhesive properties at an elevated temperature and which can be moulded without curing.

Furthermore, it is known that structural adhesives used in Automotive manufacturing are commonly applied in bead shapes on substrates. Modern dispensing equipment utilizes robotics and pumping equipment to rapidly apply the adhesives on substrates (made of metal, or composites, plastics and other) parts which are then joined, and the adhesive being subsequently cured at elevated temperatures. However, various other designs such as flat designs like cooling plates used in EV batteries cooling systems (e.g. heat exchangers) with larger and complex bonding areas will still require a long cycle time. This is because the structural adhesive must be applied by robotics where a dispensing nozzle is being moved to all areas where the highly viscous adhesive must be applied. The higher the volume of adhesive (length of bond line) the more time it will take to complete the cycle.

In another aspect, sealings are required in many applications. Ever since the first sealings of glazing putty have been used to seal window glass in their frames there has been enormous progress in properties and ways of applying sealants also sometimes referred to as gaskets. In many industries, sealings are required to manage liquids, gases or greases during operation. In areas where larger volumes of sealing material are required to be applied in a fast sequence, materials and methods suitable for fast-processing applications are desirable.

Such an area are fuel cell stacks which consist of 300 to 400 single fuel cells to be stacked on top of each. Sealings between the anode and the cathode of the single cells are required to manage the fluids during the operation of the fuel cell stack. Therefore, 2 sealings per fuel cell are required. For a fuel cell stack consisting of 400 fuel cells 800 sealings are required. Oftentimes, it is desirable to use a composition which provides both adhesive bonding and sealing properties, or which adhesively bonds various parts together and thereby provides sealing. Accordingly, there exist a desire for adhesive compositions which provide good adhesive bonding and sealing. Furthermore, there exists a desire for adhesive compositions which may be applied quickly and precisely ideally by fast automatic equipment. Finally, there exist a desire for methods for applying these adhesive compositions quickly and precisely over large areas and/or precisely defined small patterns or structures.

In addition, there exists desire in industry, in particular in the automotive industry, for adhesive formulations and methods for bonding parts which allow for and adhesive compositions which allow for precise, economic and secure bonding of metal panels, such as dissimilar metal panels, during assembly and manufacture operations such as body-in-white processes.

### Summary

The present disclosure provides a printable structural adhesive composition, comprising
(a) at least one first epoxy resin;
(b) at least one epoxy curing agent;
(c) at least one toughening agent;
wherein the printable structural adhesive composition exhibits a viscosity according to DIN 54458 at 65 °C of less than 100 Pa × s.

Furthermore, the present disclosure provides a method for applying an adhesive onto a substrate, the method comprising the following steps
(i) Providing the printable structural composition according to any one of the preceding claims;
(ii) Printing the printable structural adhesive composition onto a first substrate;
(iii) Optionally, repeating step (ii);
(iv) Optionally, placing a second substrate atop of the structural adhesive composition on the first substrate;
(v) Perform a curing step such as to cure the printable structural adhesive composition.

Finally, the present disclosure provides a use of the printable structural adhesive composition as described herein for joining and/or sealing in industrial manufacturing operations.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. It should be noted, however, that the use of "comprising" herein also encompasses the term of "consisting of", i.e. the use of "consisting of" in the sense of "consisting only of' is not excluded in the present disclosure per se.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the total amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

In one aspect, the present disclosure provides a printable structural adhesive composition, comprising
(a) at least one first epoxy resin;
(b) at least one epoxy curing agent;
(c) at least one toughening agent;
wherein the printable structural adhesive composition exhibits a viscosity according to DIN 54458 at 65 °C of less than 100 Pa × s.

The structural adhesive composition as described herein exhibits a viscosity according to DIN 54458 at 65 °C of less than 100 Pa × s. This means that the structural adhesive composition is a printable adhesive composition, which yields the advantage that the adhesive composition may be applied by printing, in particular by fast automatic or robotic equipment. Also, larger areas of substrate may be covered by the adhesive composition as described herein, and/or small and/or complicated structures or patterns may be precisely formed. This may also advantageously be carried out by fast automatic or robotic equipment. In combination with the ingredients (a), (b) and (c), a strong adhesive bond between substrates exhibiting good mechanical properties may be achieved. In particular, the printable structural adhesive composition according to the present disclosure may provide high toughness, which is highly desirable for a broad variety of applications in industry, in particular applications within the automotive industry. Also, this strong bond may also exhibit good sealing properties against a broad variety of fluids usually encountered, handled or used in industry.

In this regard, it is preferred that the printable structural adhesive composition exhibits a viscosity according to DIN 54458 at 65 °C of less than 80 Pa × s, preferably of less than 60 Pa × s, and more preferably of less than 40 Pa × s. Lowering the viscosity of the adhesive compositions according to the present disclosure has the advantage that the printing properties are improved. This may be particularly true with regard to printing smaller or more delicate structures or patterns, or generally for printing larger areas. It is further preferred that the printable structural adhesive composition exhibits a viscosity according to DIN 54458 at 65 °C of less than 30 Pa × s, preferably of less than 20 Pa × s, and more preferably of less than 10 Pa × s. Even more advantageously, the printable structural adhesive composition exhibits a viscosity according to DIN 54458 at 65 °C of less than 30 Pa × s, preferably of less than 20 Pa × s, and more preferably of less than 10 Pa × s.

### Epoxy resin

The printable structural adhesive composition comprises at least one epoxy resin. The epoxy resin for use herein is not particularly limited. Epoxy resins are polymers having one or more epoxy-functionality. Typically, but not exclusively, the polymers contain repeating units derived from monomers having an epoxy-functionality but epoxy resins can also include, for example, silicone-based polymers that contain epoxy groups or organic polymer particles coated with or modified with epoxy groups or particles coated with, dispersed in, or modified with epoxy-groups-containing polymers. The epoxy-functionalities allow the resin to undertake cross-linking reactions. The epoxy resins may have an average epoxy-functionality of at least 1, greater than one, or of at least 2. In a preferred aspect, the epoxy compound for use herein has an average epoxy equivalent weight of less than 250 g/equivalent, preferably of less than 230 g/equivalent, more preferably less than 220 g/equivalent, and even more preferably less than 200 g/equivalent. Preferably, the epoxy compound for use herein has an average epoxy equivalent weight comprised between 100 and 200 g/equivalent, preferably between 150 and 200 g/equivalent, more preferably between 170 and 200 g/equivalent. Preferably still, the epoxy compound for use herein has a weight average molecular weight of not more than 700 g/mol, preferably not more than 500 g/mol, more preferably not more than 400 g/mol. Advantageously, the epoxy compound for use herein has a weight average molecular weight comprised between 200 and 400 g/mol, preferably between 300 and 400 g/mol, more preferably between 350 and 400 g/mol. The epoxy compound for use herein is preferably selected from the group of epoxy compounds having an average epoxy functionality, i.e. an average number of polymerizable epoxy groups per molecule, of at least 2 and, more preferably, from 2 to 4.

Any epoxy resins well known to those skilled in the art may be used in the context of the present disclosure. Epoxy resins may be aromatic, aliphatic, cycloaliphatic or mixtures thereof. In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane,dihydroxydiphenyldimethylmethane, dihydroxydiphenylethylme thylmethane, dihydroxydiphenylmethylpropylmethane, dihydroxydiphenylethylphenyl-methane,dihydroxydiphenylpropylenphenylmethane, dihydroxydiphenylbutylphenyl-methane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by the formula (1) wherein n denotes the repeating unit (in case of n= 0 the formula below represents the diglycidyl ether of bisphenol A):

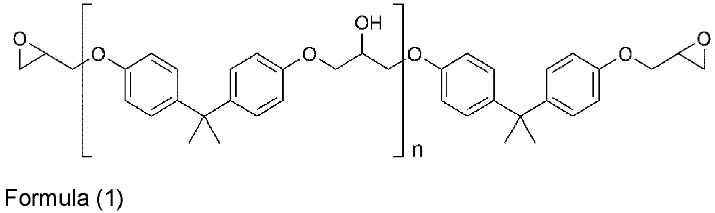

Typically, the epoxy resins are blends of several resins. Accordingly, n in the formula above may represent an average value of the blend, and may not be an integer but may include values like, for example and not limited thereto, 0.1 to 2.5.

Instead of, or in addition to, using the aromatic epoxy resins described above also their fully or partially hydrogenated derivatives (i.e. the corresponding cycloaliphatic compounds) may be used. Instead of, or in addition to using aromatic epoxy resins also aliphatic, for example acyclic, linear or branched, epoxy resins may be used.

Typically, the epoxy resin is liquid. The epoxy resins may include solid epoxy resins, used in dissolved form, or dispersed, for example in another liquid resin. Preferably, the epoxy resin is liquid at ambient conditions (23 °C, 1 bar). The epoxy resins may contain halogens, preferably bromine atoms to make them less flammable. Preferably, the at least one epoxy resin is selected from phenolic epoxy resins, bisphenol epoxy resins, hydrogenated epoxy resins, aliphatic epoxy resins, halogenated bisphenol epoxy resins, novolac epoxy resins, and any combinations and mixtures thereof.

Examples of suitable and commercially available epoxy resins include diglycidylether of bisphenol A (available under the trade designation EPON 828, EPON 830, EPON 1001 or EPIKOTE 828 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA). Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.). Cycloaliphatic epoxy resins are commercially available under the trade designation EPINOX (Hexion Specialty Chemicals GmbH). Also, the adhesive composition as described herein may comprises at least one solid epoxy resin, and/or at least one liquid epoxy resin. The adhesive composition as described herein may further comprise further ingredients such as toughening agents mixed with or contained in epoxy resins. For example, the printable structural adhesive composition according to the present disclosure may contain at least solid epoxy resin in an amount in the range of from 1 to 25 wt.-%, preferably from 2 to 20 wt.-%, more preferably from 3 to 15 wt.-%; at least one liquid epoxy resin in an amount in the range of from 1 to 1 to 25 wt.-%, preferably from 2 to 20 wt.-%, more preferably from 3 to 15 wt.-%; at least one epoxy resin containing at least one toughening agent in an amount in the range of from 20 to 80 wt.-%, preferably from 25 to 75 wt.-%, and more preferably from 30 to 70 wt.-%; all ranges of amounts are relative to the total weight of the structural adhesive composition

### Epoxy curing agent

The printable structural adhesive film according to the present disclosure comprises at least one epoxy curing agent. Any epoxy curing agent, commonly known in the art, may be used in the thermosettable composition of the structural adhesive film of the invention. Suitable epoxy curing agents for use herein are materials that react with the oxirane ring of the organic epoxide to cause substantial cross-linking of the epoxide. These materials contain at least one nucleophilic or electrophilic moiety (such as an active hydrogen atom) that causes the cross-linking reaction to occur. Epoxy curing agents are distinct from epoxide chain extension agents, which primarily become lodged between chains of the organic epoxide and cause little, if any cross-linking. Epoxy curing agents as used herein are also known in the art as epoxy hardeners, epoxide hardeners, catalysts, epoxy curatives, and curatives.

Sometimes, differentiation is made between epoxy curing agents and accelerators which are used to increase the rate of the epoxide curing reaction. Accelerators typically are multifunctional materials which can also be classified as epoxy curing agents. Therefore, in the present specification, no differentiation is made between curing agents and accelerators.

Epoxy curing agents for use herein include those which are conventionally used for curing epoxy resin compositions and forming crosslinked polymer networks. Suitable epoxy curing agents may also be referred to as latent curing agents, which are typically chosen so that they do not react with the epoxy resin until the appropriate processing conditions are applied. Such compounds also include aliphatic and aromatic tertiary amines such as dimethylaminopropylamine and pyridine, which may act as catalysts to generate substantial crosslinking. Further, boron complexes, in particular boron complexes with monoethanolamine, imidazoles such as 2-ethyl-methylimidazole, guanidines such as tetramethyl guanidine, dicyanodiamide (often referred to as DICY), substituted ureas such as toluene diisocyanate urea, aliphatic ureas, or bisphenyl dimethyl urea, and acid anhydrides such as the 4-methyltetrahydroxyphthalic acid anhydride, 3-methyltetrahydroxyphthalic acid anhydride and methylnorbornenephthalic acid anhydride, may be employed. Still other useful epoxy curing agents include polyamines, mercaptans and phenols. Other epoxy curing agents for use herein include encapsulated amines, Lewis acids salts, transition metal complexes and molecular sieves. Preferably, the epoxy curing agent is selected from the group consisting of amines, acid anhydrides, guanidines, dicyandiamide and mixtures thereof. More preferably, the epoxy curing agent contains dicyandiamide. Suitable epoxy curing agents for use herein are commercially available from Air Products under tradename Amicure^{®} CG-1200, or Dyhard 100 com Alzchem. Exemplary polyether amines suitable for use herein are commercially available under the trade designation JEFFAMINE from Huntsman Chemicals, or TTD (4,7,10-trioxatridecane-1,13-diamine) commercially available, for example, from BASF, Ludwigshafen Germany. The polyamidoamine may be branched or unbranched aromatic or branched or unbranched aliphatic. Preferably, the polyamidoamine is an aliphatic polyamidoamine. Polyamidoamines which may be advantageously used in the context of the present disclosure are obtained as described in [0010] to [0029] of EP 249527 A1, the disclosure of which is incorporated herein by reference.

The amount of epoxy curing agents in the thermosettable composition of the structural adhesive composition is typically comprised between 1 and 15 wt.-%, preferably from 2 to 12 wt.-%, and more preferably from 3 to 9 wt.-%, based on total weight of the structural adhesive composition.

### Toughening agent

The printable structural adhesive composition according to the present disclosure comprises at least one toughening agent. As commonly known in the art, the term "toughening agent" may be used interchangeably with the term "impact modifier". Using an impact modifier or toughening agent will have the effect of improved impact resistance of the cured structural adhesive composition even at lower temperatures. That is, the cured structural adhesive composition is tougher or is toughened. Accordingly, cured printable structural adhesive compositions as described herein comprising at least one toughening agent may exhibit higher overlap shear strengths (according to DIN EN 1465) and/or adhesive peel strengths (according to DIN EN 1464) than comparable structural adhesive compositions lacking the at least one toughening agent.

Any toughening agent commonly known in the art may be used in the expandable structural adhesive film according to the present disclosure. The at least one impact modifier is preferably selected from a group comprising core-shell toughening agents, CTBNs (carboxyl and/or nitrile terminated butadiene/nitrile rubbers) and high molecular weight amine terminated polytetramethylene oxide, and any combinations and mixtures thereof. Core-shell impact modifier which are especially preferred, usually comprise different materials in the inner core region and the outer shell region, respectively. Preferably, the core may be harder than the shell but this is not required. The shell may comprise harder material and/or the shell may be layered in its construction. Most preferably, the inner hard core component is comprised of a single and/or a plurality of organic polymers and inorganic oxides from the first, second and/or third transition series of the periodic table such as silica, alumina, zirconia, and/or naturally occurring minerals such as feldspars, silicates, aluminates, zirconates, and/or other hardened materials such as carbides, nitrides, silicides, aluminides, and/or some combination thereof and therebetween. The outer soft shell component may be comprised of rubbers such as diene, olefin rubbers, natural rubber, polyisoprene, copolymers thereof, ethylene propylene monomer rubber, diene-acrylonitrile copolymers, copolymers of vinyl aromatic monomers, styrene-butadiene copolymers known as SBR rubbers, and terpolymers of dienes with acrylonitrile or unsaturated esters and styrene or vinyl toluene. The soft shell preferably includes modifications with functionalities such as carboxyl, hydroxyl, epoxy, cyanates, isocyanates, amino, and thiol which can react with the epoxy components of the precursor. Core-shell impact modifiers which are useful in the expandable structural adhesive film are commercially available, for example, from Rohm and Hass under the trade designation Paraloid^{™}. CTBN toughening agents react through their carboxyl and/or nitrile functional groups with the epoxide component of the precursor during curing thereby introducing their butadiene/nitrile rubber portion as a soft, shock-absorbing segment into the epoxy network forming a hard segment. CTBN toughening agents/impact modifiers which are useful in the present disclosure are commercially available, for example, from Hanse Chemie AG, Hamburg, Germany, under the trade designation Albipox^{™}. Similarly, a high molecular weight amine terminated polytetramethylene oxide useful in structural adhesive film as described herein is commercially available, for example, from 3M Company, St. Paul/MN, USA, under the trade designation "3M EPX^{™} Rubber". It is preferred that the at least one toughening agent comprises at least one first toughening agents and at least one second toughening agent different from the at least one first toughening agent. This may have the effect of improved toughening over a broader range of temperatures. The amount of the at least one impact modifier in the structural adhesive composition as disclosed herein is preferably in the range of from 10 to 50 wt.-%, preferably between 15 and 45 wt.-%, more preferably between 20 and 40 wt.-%, based on total weight of the printable structural adhesive composition.

### Reactive diluent

It is further preferred that the printable structural adhesive composition according to the present disclosure comprises an epoxy-based reactive diluent. Reactive diluents are epoxy-containing molecules. The epoxy-based reactive diluent for use herein is not particularly limited. Any epoxy-based reactive diluent commonly known in the art may be used in the context of the present disclosure.

Without wishing to be bound by theory, it is believed that the epoxy-based reactive diluent beneficially impacts, in particular, the flow characteristics of the printable structural adhesive compositions as described herein.

In a particular aspect of the present disclosure, the epoxy-based reactive diluent for use herein has a saturated or unsaturated cyclic backbone, and preferably comprises glycidyl ether as reactive terminal end portions.

According to a preferred aspect, the epoxy-based reactive diluent for use herein is selected from the group consisting of diglycidyl ether of resorcinol, diglycidyl ether of cyclohexane dimethanol, diglycidyl ether of neopentyl glycol, triglycidyl ether of trimethylolpropane, and any mixtures thereof.

Commercially available reactive diluents for use herein include for example "Reactive Diluent 107" (available from Hexion), the "Epodil" series (available from Air Products and Chemical Inc, Allentown, PA, USA) including in particular EPODIL 746, EPODIL 747, EPODIL 748 and EPODIL 757 and reactive diluents from ipoxy Chemicals GmbH, Germany.

Preferably, the at least one toughening agent is contained in the structural adhesive composition in an amount in the range of from 10 to 50 wt.-%, preferably from 15 to 45 wt.-%, and more preferably from 20 to 40 wt.-%, based on the total weight of the printable structural adhesive composition.

### Filler material

Furthermore, the printable structural adhesive composition may comprise at least one filler material. It may also be, however, advantageous not to include any filler materials in the printable structural compositions as described herein. Hence, in a preferred embodiment, the printable structural adhesive composition according to the present disclosure does not comprise filler materials. Filler materials useful in adhesive compositions are known in the art and may be selected from mineral fillers, silica and glass beads. Silica compounds may have the effect of giving rise to improved flow, improved workability and increased of the compositions as described herein, without sacrificing mechanical strength or resistance to water and the like of the cured coatings obtained therefrom. In this regard, it is preferred that the at least one silica compound is selected from fused silica, fumed silica, perlite, and any combinations and mixtures thereof. Silica compounds as described herein may preferably be employed in the form of silica particles. Preferably, the silica particles comprise fumed silica, preferably hydrophobically fumed silica, fused silica, amorphous silica particles, hollow silica particles, silica gels, calcium silicates, and any combinations thereof. Exemplary commercial fillers include SHIELDEX AC5 (a synthetic amorphous silica, calcium hydroxide mixture available from W.R. Grace in Columbia, MD, USA); CAB-O-SIL TS 720 (a hydrophobic fumed silica-treated with polydimethyl-siloxane-polymer available from Cabot GmbH in Hanau, Germany); AEROSIL VP-R-2935 (a hydrophobically fumed silica available from Degussa in Düsseldorf, Germany); AEROSIL R-202 (a hydrophobically fumed silica available from Evonik Industries, Germany); glass-beads class IV (250-300 microns): amorphous silica (available from 3M Deutschland GmbH in Neuss, Germany); Fusil SF 20 (available from 3M. 510 Midway, Tennessee, USA); amorphous, fused silica; and APYRAL 24 ESF (epoxysilane-functionalized (2 wt.-%) aluminium trihydrate available from Nabaltec GmbH in Schwandorf, Germany). Fused silica is available, for example, under the trade designation Fusil from 3M, USA.

### Method

The present disclosure further provides a method for applying an adhesive onto a substrate, the method comprising the following steps
(i) Providing the printable structural composition according to any one of the preceding claims;
(ii) Printing the printable structural adhesive composition onto a first substrate;
(iii) Optionally, repeating step (ii);
(iv) Optionally, placing a second substrate atop of the structural adhesive composition on the first substrate;
(v) Perform a curing step such as to cure the printable structural adhesive composition.

Due to its properties of the structural adhesive composition according to the present disclosure, in particular having a viscosity in the ranges as described herein, applying the structural adhesive composition is carried out by printing it onto the surface of the first substrate. This is highly advantageous compared to applying a structural adhesive by extruding a paste due to increased speed, improved precision, improved control of the amount or thickness of the adhesive applied, and/or due to the use of fast robotic equipment, preferably computer-controlled equipment.

Printing may be carried out by any means known in the art. Preferably, printing in step (ii) comprises jet printing, pad printing, screen printing and/or stencil printing. These printing methods offer the advantages as described herein, and may be selected and adapted with regard to the intended use, surface structure, surface area to be covered, and/or thickness of the pattern to be applied. It is preferred that printing is carried out by printing the structural adhesive composition having a temperature in the range of from 20 to 90 °C, preferably from 25 to 85 °C, more preferably from 30 to 80 °C. Lower temperatures may lead to an undesired increase of viscosity, whereas higher temperatures may lower the viscosity even more, or even lead to partial pre-curing of the adhesive or undesired side reactions.

In one aspect of the method according to the present disclosure, it is preferred that printing comprises jet printing, preferably by an application head of automated robotic equipment. Jet printing as used herein means the application of the printable structural adhesive composition via non-contact drop-on-demand printing methods. In general, the structural adhesive composition as described herein is deposited onto the surface of the first surface in the form of small droplets or even microdroplets. Hence, the fact that the printable structural adhesive as described is printed by jet printing while retaining superior adhesion properties presents a wide range of very attractive benefits, such as non-contact, on demand, high frequency (which equals high throughput), accuracy and can be coupled with full robotization. Additionally, the small and consistent size of the droplets in jet printing (typically 0.2-1.5 mm) leads to precise deposition and virtually eliminates material waste. Finally, the potential control of an individual nozzle on the jetting device enables fine deposition of complex and unlimited patterns and form factors. This is particularly attractive as the "printing" pattern can be modified to suit customer needs as well as new applications. All these advantages result in time savings and structural adhesive efficient use (faster adhesive application, shorter cycles, and smaller rework/corrections) which translates to cost savings in the automotive industry. This is also highly advantageous with regard to the general desire in the automotive industry to reduce vehicle weight.

Jet printing as described herein is preferably carried out by means of an application head of automated robotic equipment. This has the advantage of speed, precision and control, in particular by computers and corresponding software. Preferably, the application head comprises at least one piezo valve. This is particularly advantageous due to the very fast opening and closing times of the valve, thereby enabling to depose very small droplets, which greatly benefices precision and the possibility to print definite small patterns. In general, jet printing means that the printable structural adhesive composition is applied dropwise onto the first substrate. Preferably, the dropwise printing of the printable structural adhesive composition is carried out in a way such beads, lines structures, and/or areas are formed on the surface of first substrate. The beads, lines, structures and/or areas may be formed on the same level on the first substrate or atop of previously formed beads, lines, structures and/or areas.

Printing by jet printing is preferably carried out when two substrates are to be adhesively joined. This is mostly the case in joining operations in the automotive industry. Hence, it is preferred that step (iv) comprises placing a second substrate atop of the structural adhesive composition on the first substrate. The first substrate and/or second substrate may comprise a material selected from metals, carbon fiber, fiberglass, and composite materials. In particular, the first and/or second substrate may comprise a steel panel or a aluminium panel. Preferably, the method as described herein comprises a hem flange bonding process as well-known in the art in the automotive industry. In the hem flange process, the printable structural adhesive yields the advantage that it adhesively bonds the first and second substrate together and seals the hem flange.

In another aspect of the method of the present disclosure, printing in step (ii) comprises pad printing. Pad printing comprises printing the printable structural adhesive over a defined area of the surface of the first substrate. In particular, pad printing is highly advantageous in applications involving flat designs like cooling plates used in EV batteries cooling systems (such as heat exchangers) with larger and complex bonding areas. Pad printing, when compared to other standard dispensing techniques, offer advantages with regard to speed and cycle times. For example, a dispensing nozzle would take much longer since it would be needed to all areas where the adhesive must be applied by robotics. Hence, pad printing is particularly advantageous in the EV segment and EV assembly (including battery assembly), cell-to-cell bonding, cover sealing, cooling pipes and channel bonding. The surface of the first substrate may be selected from flat surfaces, cylindrical surfaces, spherical surfaces, compound angles surfaces, textured surfaces, concave surfaces, or convex surfaces. Preferably, the method comprising pad printing as described herein comprises bonding, joining and sealing of parts of batteries, fuel cells, electronic components and/or photovoltaic systems. It is also preferred that the method comprising pad printing as described herein comprises cell-to-cell bonding, cover sealing, cooling pipes, and/or channel bonding.

In yet another aspect of the method according to the present disclosure, printing in step (ii) comprises screen and/or stencil printing. This is advantageous because screen printing as application method for structural adhesives as described herein, high precision and short cycle times can be achieved, while controlling the adhesive volume being applied effectively onto the first surface. Furthermore, the sequence of printing and curing may be regarded as a cure-in-place sequence. The final shape of the printed and cured adhesive as described herein can then be used as a sealing, even in demanding applications with regard to mechanical stress, temperature and exposure to aggressive chemicals. Screen and/or stencil printing as such are well-known to the skilled person. Preferably, the method comprising screen and/or stencil printing as described herein comprises bonding, joining and sealing of parts of batteries, fuel cells, electronic components and/or photovoltaic systems. In this conjunction, the method preferably comprises cell-to-cell bonding, cover sealing, cooling pipes, and/or channel bonding. In step (ii) the printable structural adhesive composition provides an adhesive layer and/or a sealant. Preferably, the adhesive layer and/or sealant forms at least part of a sealant in a battery or a fuel cell. In general, the adhesive layer and/or sealant may form at least part of a sealant in PEM fuel cell sealings, PEM fuel electrolysis systems sealings, alkaline fuel cells, direct methanol fuel cells, battery sealings, membrane sealings, pump sealings, oven sealings, and sealings of housings for electronics and power electronics.

Heating during the curing step may be carried out by various means known to the skilled person. In particular, heating steps already present in existing assembly processes e.g. in the automotive industry may be exploited for this purpose. For instance, the curing step (IV) may take place in parallel to the curing of paint or coating in the paint bake oven used in automotive industries. Thus, it is preferred that the curing step (IV) comprises heating treatment selected from induction heating, convection heating, IR heating, ultrasonic treatment, microwave heating, laser treatment, welding treatment and/or resistive heating, joule heating, ohmic heating, and any combination therefrom. It is also preferred that wherein the curing step comprises convection heating, IR heating and/or welding treatment, preferably convection heating. Convention heating occurs, for instance, in a paint bake oven often used in the automotive industry. With regard to the temperatures applied in the curing step (IV) in the method according to the present disclosure, it is preferred that temperature is at least 150 °C, preferably at least 160 °C and more preferably at least 170 °C. Preferably, the temperature in the curing step (IV) is 250 °C and less, preferably 240 °C and less, and more preferably 230 °C and less. Hence, it is preferred that the temperature in the curing step (IV) is in a range of from 150 to 250 °C, preferably from 160 to 240 °C and more preferably 170 to 230 °C. If the printable structural adhesive composition had secure contact, i.e. on essentially all of one of its major surfaces, to the first metal panel, it expands in this heating step, contacting also the second metal panel, and fills any gaps therebetween. This has the effect that the first and second metal panels are adhesively connected. Also, the assembly is effectively sealed. Sealing in particular towards water and the like is advantageous in that an effective corrosion protection is provided.

The present disclosure further provides a use of the printable structural adhesive composition as described herein for joining and/or sealing in industrial manufacturing operations. In general, the use comprising printing the printable structural adhesive composition onto at least one substrate. Preferably, printing is carried out by means of automated or robotic equipment. In this regard, it is preferred that printing comprises pad printing, jet printing, screen printing and/or stencil printing. It is preferred that the use comprises sealing operations in chemically and/or temperature challenging environments, preferably selected from the manufacture of PEM fuel cell sealings, PEM fuel electrolysis systems sealings, alkaline fuel cells, direct methanol fuel cells, battery sealings, membrane sealings, pump sealings, oven sealings, and sealings of housings for electronics and power electronics. It is preferred that use comprises the manufacture of cooling plates, cooling systems, preferably heat exchangers in electronic equipment, preferably batteries. It is further preferred that the use comprises battery assembly, preferably cell-to-cell-bonding, cover sealing, manufacture of cooling pipes and/or channel bonding.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### Overlap Shear Strength (OLS) according to DIN EN 1465

The surface of the OLS metal sheets (steel, grade DX54+ZMB-RL1615, 0.8 mm thickness) were cleaned with n-heptane. The metal sheets are left at ambient room temperature (23 °C +/- 2 °C, 50% relative humidity +/-5%) for 24 hours prior to testing and the OLS strength is measured as described below.

Overlap shear strength was determined according to DIN EN 1465 using a Zwick Z050 tensile tester (commercially available by Zwick GmbH & Co. KG, Ulm, Germany) operating at a cross head speed of 10 mm/min. For the preparation of an Overlap Shear Strength test assembly, a curable composition is placed onto one surface of a prepared metal sheet and a sprinkle of glass beads (0.30 mm diameter) are placed on the curable composition to ensure a thickness of 0.30 mm of the curable composition layer during the curing process. Afterwards, the sample was covered by a second metal sheet forming an overlap joint of 10 mm. The overlap joints are then clamped together using two binder clips and the test assemblies are further stored at room temperature for 4 hours after bonding, and then placed into an air circulating oven from Heraeus (curing duration and temperatures to be taken from example sections). The next day, the samples are tested directly. Three samples are measured for each of the examples and results averaged and reported in MPa.

### Wedge impact peel according to ISO 11343

For impact peel strength testing, specimens are prepared and tested in accordance with ISO 11343, using a bonding area of 30x20 mm, an adhesive layer thickness of 0.3 mm and a test speed of 2 m/s. Substrates for impact peel strength testing are galvanized cold rolled steel. Curing conditions were set to 30 minutes at 180° C. Cured test specimens were stored at 23 °C +/- 2 °C, 50% relative humidity +/-5%, for 24 hours prior to testing. Wedge impact peel values are reported in N/mm.

### T-Peel Strength Measurements according to DIN EN 14173

T-peel specimens were made using steel panels measuring 25x150 mm. The surface of the t-peel metal sheets (steel, grade DX54+ZMB-RL1615, 0.8 mm thickness) were cleaned with n-heptane. The metal sheets are left at ambient room temperature (23 °C +/-2 °C, 50% relative humidity +/-5%) for 24 hours prior to testing and the t-peel force is measured as described below.

T-peel force was determined according to DIN EN 14173 using a Zwick Z050 tensile tester (commercially available by Zwick GmbH & Co. KG, Ulm, Germany) operating at a cross head speed of 100 mm/min.

For the preparation of a t-peel test assembly, a curable composition is placed onto one surface of a prepared metal sheet and a sprinkle of glass beads (0.30 mm diameter) are placed on the curable composition to ensure a thickness of 0.30 mm of the curable composition layer during the curing process. Afterwards, the sample was covered by a second metal sheet forming an overlay of two metal sheets with 25x100x0.3 mm adhesive layer in between. The t-peel joints are then clamped together using six binder clips and the test assemblies are further stored at room temperature for 4 hours after bonding, and then placed into an air circulating oven from Heraeus (curing duration and temperatures to be taken from example sections). The next day, the samples are tested directly. Three samples are measured for each of the examples and results averaged and reported in N.

### Rheology testing according to DIN 54458

Using an Anton Paar MCR 302 rheometer with 25 mm parallel plate geometry the rheological properties of the formulations were tested according to DIN 54458 at 65 °C. A1 and A7 were determined to characterize the formulations in terms of printability.

### Sample preparation:

An adhesive composition according to ex. 1 set forth in table 1 was prepared as follows: A one-part (1K) adhesive was formulated by combining epoxy resins, DGEBA and 1001F and solids (Kaneka B-564 and dicyandiamide) in a Speemixer cup (Speedmixer DAC 150600.2 VAC-P, available from Hauschild Engineering, Germany) and mixing for 5 min at 3500 rpm. A homogeneous mixture was obtained. CSR masterbatches (Kaneka MX types) were then added and the treater again for 5 min at 3500 rpm in the Speedmixer. Finally, the liquid diluent RD24 was added to the formulation and the mixture again treated for 5 min at 3500 rpm in the Speedmixer.

**Table 1: Composition of example 1. CSR = core shell rubber; MB = master batch.**

| Raw material | Function | Weight [g] |
|---|---|---|
| Hexion Epon 1001F | Solid epoxy resin | 6.00 |
| Ipox RD24 | Epoxy diluent | 5.00 |
| Kane Ace MX 257 | CSR¹ epoxy MB² | 20.00 |
| Kane Ace MX 153 | CSR epoxy MB | 20.00 |
| Hexion Epon 828 | Liquid epoxy resin | 4.00 |
| Omicure DDA 10 | Curative | 3.60 |
| Kane Ace B 564 | CSR | 5.00 |
| **Total** | | 63.60 |

Viscosity tests were carried out on the viscosity properties of ex. 1 and of a competitive 1K epoxy structural adhesive composition (comparative example 1) according to DIN 54458 at 65 °C.

**Table 2: Test results of ex. 1 and comp. ex. 1 according to DIN 54458 at 65 °C.**

| | **Prototypical formulation** | **Competitive product** |
|---|---|---|
| **Amplitude sweep** | | |
| Flowability (A1) | Gamma = 0.05 %; \|eta*\| = 11.64 Pa·s | Gamma = 0.05 %; \|eta*\| = 677.4 Pa·s |
| Levelling behavior (A2) | Gamma = 0.05 %; G' = 403.7 Pa | Gamma = 0.05 %; G' = 39910.0 Pa |
| Yield stress (A3) | Tau = 0.116 Pa; gamma = 0.0165 % | Tau = 28.3 Pa; gamma = 0.07 % |

| **Shear phase** | | |
|---|---|---|
| Flowability, Pumpability (A4) | T = 130 s; \|eta*\| = 9.08 Pa·s | T = 130 s; \|eta*\| = 91.34 Pa·s |
| Shear stability during pumping (A5) | T = 130 s; tan(delta) = 2.142; delta = 64.97° | T = 130 s; tan(delta) = 2.142; delta = 64.97° |
| Stringing (A6) | T = 130 s; tan(delta) = 2.142; delta = 64.97° | T = 130 s; tan(delta) = 2.03; delta = 63.74° |

| **Behavior in rest after recovery** | | |
|---|---|---|
| Flow behavior (A7) | T = 60 s; \|eta*\| = 11.81 Pa·s | T = 60 s; \|eta*\| = 634.4 Pa·s |
| Levelling behavior (A8) | T = 60 s; G' = 418.9 Pa | T = 60 s; G' = 37320.0 Pa |
| Stringing (A9) | Tan(delta) = 1.46; delta = 55.62° | Tan(delta) = 0.36; delta = 19.73° |

Mechanical adhesive properties of the composition of ex. 1 were tested. The results are summarized in table 3.

**Table 3: Mechanical properties of ex. 1.**

| **Measurement** | **Value** |
|---|---|
| OLS DIN EN 1465 | 20.5 MPa |
| T-peel DIN EN 14173 | 160 N |
| i-peel ISO 11343 | 39 N/mm |
| i-peel ISO 11343 | 17.5 N/mm |

Furthermore, a screen printing experiment was conducted with the composition of ex. 1. A mesh was placed on top of an aluminium plate, and a scraper was used to push the adhesive through the mesh and wet the substrate. There were no problems encountered when subsequently removing the mesh. The pattern used on the mesh was clearly visible on the aluminium plate. Accordingly, screen printing was successfully demonstrated for the printable structural adhesive according to the present disclosure.

## Claims

1. A printable structural adhesive composition, comprising
(a) at least one first epoxy resin;
(b) at least one epoxy curing agent;
(c) at least one toughening agent;
wherein the printable structural adhesive composition exhibits a viscosity according to DIN 54458 at 65 °C of less than 100 Pa × s.

2. The printable structural adhesive composition according to claim 1, wherein the printable structural adhesive composition exhibits a viscosity according to DIN 54458 at 65 °C of less than 80 Pa × s, preferably of less than 60 Pa × s, and more preferably of less than 40 Pa × s.

3. The printable structural adhesive composition according to claim 1 or claim 2, wherein the at least one toughening agent is selected from butadiene rubbers, nitrile rubbers, core shell-rubbers, and any combinations and mixtures thereof.

4. The printable structural adhesive composition according to any one of the preceding claims, wherein the printable structural adhesive composition further comprises at least one reactive diluent.

5. A method for applying an adhesive onto a substrate, the method comprising the following steps
(i) Providing the printable structural composition according to any one of the preceding claims;
(ii) Printing the printable structural adhesive composition onto a first substrate;
(iii) Optionally, repeating step (ii);
(iv) Optionally, placing a second substrate atop of the structural adhesive composition on the first substrate;
(v) Perform a curing step such as to cure the printable structural adhesive composition.

6. The method according to claim 5, wherein printing in step (ii) comprises jet printing, pad printing, screen printing and/or stencil printing.

7. The method according to claim 5 or claim 6, wherein in step (ii), printing is carried out by printing the structural adhesive composition having a temperature in the range of from 20 to 90 °C, preferably from 25 to 85 °C, more preferably from 30 to 80 °C.

8. The method according to any one of claims 5 to 7, wherein printing comprises jet printing, preferably by an application head of automated robotic equipment.

9. The method according to claim 8, wherein the printable structural adhesive composition is applied dropwise onto the first substrate, preferably wherein the dropwise printing of the printable structural adhesive composition is carried such beads, lines structures, and/or areas are formed.

10. The method according to 8 or claim 9, wherein the first substrate and/or second substrate comprise a material selected from metals, carbon fiber, fiberglass, and composite materials.

11. The method according to any one of claim 5 to 7, wherein pad printing comprises printing the printable structural adhesive over a defined area of the surface of the first substrate.

12. The method according to 11, wherein the surface of the first substrate is selected from flat surfaces, cylindrical surfaces, spherical surfaces, compound angles surfaces, textured surfaces, concave surfaces, or convex surfaces.

13. The method according to any one of claims 5 to 7, wherein the method comprises bonding, joining and sealing of parts of batteries, fuel cells, electronic components and/or photovoltaic systems, preferably wherein the method comprises cell-to-cell bonding, cover sealing, cooling pipes, and/or channel bonding.

14. The method according to claim 13, wherein in step (ii) the printable structural adhesive composition provides an adhesive layer and/or a sealant, preferably wherein the adhesive layer and/or sealant forms at least part of a sealant in a battery or a fuel cell.

15. Use of the printable structural adhesive composition according to any one of claims 1 to 4 for joining and/or sealing parts in industrial manufacturing operations.
